# EUROPÄISCHE PATENTSCHRIFT

(11) **EP 3 470 313 B1**
(45) Veröffentlichungstag und Bekanntmachung des Hinweises auf die Patenterteilung: **31.12.2025**
(21) Anmeldenummer: 18199294.2
(22) Anmeldetag: 09.10.2018
(51) Int. Cl.: G05B 19/418, B62D 33/027, B62D 63/02

(54) **FAHRZEUG ZUM AUTONOMEN TRANSPORTIEREN EINES OBJEKTES**
VEHICLE FOR AUTONOMOUSLY TRANSPORTING AN OBJECT
VÉHICULE DESTINÉ AU TRANSPORT AUTONOME D'UN OBJET

(30) Priorität: 10.10.2017 DE 102017123491
(43) Veröffentlichungstag der Anmeldung: 17.04.2019
(73) Patentinhaber: Deutsche Post AG, 53113 Bonn (DE)
(72) Erfinder: Niezgoda, Denis, 50939 Köln (DE); Dr.Bickel, Ingo F., 53340 Meckenheim (DE)
(74) Vertreter: Michalski Hüttermann & Partner Patentanwälte mbB

(56) Entgegenhaltungen:
- DE-A1- 10 043 578
- DE-A1- 10 325 424
- DE-U1- 202013 103 863
- DE-U1- 202016 100 238
- JP-A- 2016 080 362
- KR-A- 20160 140 183
- US-A1- 2008 217 945

## Beschreibung

### Technisches Gebiet

Die Erfindung betrifft ein Fahrzeug zum autonomen Transportieren eines Objektes an einen Zielort, mit einer Ladefläche zum Aufnehmen des Objektes, einer sich längs um die Ladefläche herum erstreckenden und eine Grundfläche der Ladefläche begrenzenden Seitenwand, und einer Steuerung.

### Hintergrund der Erfindung

Fahrzeuge zum autonomen Transportieren eines Objektes an einen Zielort sind aus dem Stand der Technik bekannt und beispielsweise als Kleinlaster oder Kommissionierwagen ausgeführt. Bei letztgenannter Variante handelt es sich oftmals um einen automatisierten Roboter-Rollwagen, der einem Lagermitarbeiter beim sogenannten "Picking", einem gezielten Heraussuchen von Objekten auf Basis einer Kundenbestellung in einem Lager oder in einem Logistikzentrum, automatisch in einem vorbestimmten Abstand durch ein Regalsystem des Logistikzentrums folgt, damit der Lagermitarbeiter die herausgesuchten Objekte in den Kommissionierwagen ablegen kann. Sobald alle Artikel herausgesucht sind oder der Kommissionierwagen gefüllt ist, schickt der Lagermitarbeiter den beladenen Kommissionierwagen zu einem Abladeort, den der Kommissionierwagen autonom ohne weiteres manuelles Zutun automatisch ansteuert. Ein weiterer, unbeladener Kommissionierwagen fährt ebenso autonom und automatisch zu dem Lagermitarbeiter, damit dieser den weiteren Kommissionierwagen mit weiteren Objekten beladen kann. Um sich autonom in dem Logistikzentrum bewegen zu können, verfügen die Kommissionierwagen verfügen über unterschiedliche Sensoren, anhand derer sich die Kommissionierwagen initial eine Karte des Logistikzentrums anfertigen. Während des Betriebs wird die Karte aktualisiert und zwischen unterschiedlichen Kommissionierwagen ausgetauscht, damit veränderte Bedingungen in dem Logistikzentrum von den einzelnen Kommissionierwagen erkannt und selbständig umfahren werden können.

Obwohl die Kommissionierung durch die beschriebene Automatisierung wesentlich vereinfacht wird, da die Lagermitarbeiter beispielsweise beide Hände frei haben und keinen schweren Handwagen manuell hinter sich herziehen oder schieben müssen, ist der Einsatzbereich der derzeit verfügbaren Kommissionierwagen begrenzt. Denn durch Zunahme des Online-Handels und damit einhergehender Zunahme von Kommissioniervorgängen in sogenannten als "Warehouses" ausgestalteten Logistikzentren werden flexiblere Lager- und Kommissionierlösungen verlangt, um sowohl nur wenige als auch außerordentlich viele Objekte umfassende Kundenbestellungen mit den beschriebenen und in ihrer Nutzfläche beschränkten Kommissionierwagen zusammenstellen zu können. Zudem sind die "Warehouses" durch Regalsysteme unterschiedlicher Durchfahrtsbreiten zwischen den Regalen gekennzeichnet. Durch den fortwährenden Umschlag von Objekten unterschiedlichster Dimensionen ändern sich die Durchfahrtsbreiten in den Logistikzentren regelmäßig, was die Kommissionierwagen vor kaum überbrückbare Probleme stellt, sich autonom in dem Logistikzentrum zu bewegen. Noch vor kurzem passierbare Gänge können kurzfristig eine zu enge Durchfahrtsbreite aufweisen, die die Kommissionierwagen nicht bewältigen können.

DE 20 2016 100 238 U1 beschreibt ein Fahrzeug umfassend eine Hauptladepritsche, die einen Boden und ein erstes Paar sich gegenüberliegender Seitenwände umfasst, die sich von jeder Seite des Bodens erstrecken; und eine Erweiterungsanordnung mit einer relativ zu der Hauptladepritsche gleitfähigen Basis, ein zweites Paar sich gegenüberliegender Seitenwände, die sich drehbar von der Basis erstrecken, und eine Heckklappe, die schwenkbar mit der Basis gekoppelt ist, wobei die Basis eine im Wesentlichen flach am Boden verstaute Position definiert.

JP 2016 080 362 A beschreibt ein Navigationsgerät, welches bei der Suche nach einer Route die Größe - Länge, Breite, Höhe - des Fahrzeuges berücksichtigt.

DE 100 43 578 A1 beschreibt ein Verfahren zur Berechnung einer Route von einem Start- zu einem Zielort für ein Fortbewegungsmittel unter Verwendung Verkehrswege beschreibender Verkehrswegeinformationen.

DE 103 25 424 A1 beschreibt ein Verfahren zur Zielführung eines Fahrzeuges mit einer Positionsbestimmungseinrichtung zur Bestimmung der momentanen Position des Fahrzeuges und einer Verarbeitungseinrichtung zur Ermittlung einer Fahrtroute zu einem vorbestimmten Ziel sowie eine Vorrichtung zur Zielführung, die eine Positionsbestimmungseinrichtung zur Bestimmung der momentanen Position des Fahrzeuges, eine Eingabeeinrichtung zur Eingabe mindestens eines Zielpunktes einer gewünschten Route und eine Verarbeitungseinrichtung, die auf digitale Daten zumindest eines Teiles eines Straßennetzes zugreifbar ausgebildet ist und die in Abhängigkeit der momentanen Position des Fahrzeuges und des eingegebenen Zielpunktes mindestens eine Fahrtroute ermittelt, aufweist.

### Beschreibung der Erfindung

Ausgehend von dieser Situation ist es eine Aufgabe der vorliegenden Erfindung, ein Fahrzeug zum autonomen Transportieren eines Objektes an einen Zielort anzugeben, welches gegenüber den aus dem Stand der Technik bekannten Fahrzeugen wesentlich flexibler hinsichtlich der zu transportierenden Objekte einsetzbar ist und veränderte Durchfahrtsbreiten bei der Navigation an den Zielort berücksichtigt.

Die Aufgabe wird durch die Merkmale des unabhängigen Anspruchs gelöst. Vorteilhafte Ausgestaltungen sind in den Unteransprüchen angegeben.

Demnach wird die Aufgabe durch ein Fahrzeug zum autonomen Transportieren eines Objektes an einen Zielort gelöst, mit einer Ladefläche zum Aufnehmen des Objektes, einer sich längs um die Ladefläche herum erstreckenden und eine Nutzfläche der Ladefläche begrenzenden Seitenwand, und einer Steuerung, wobei die Ladefläche ausgeführt ist, die Nutzfläche zu verändern und die Steuerung ausgeführt ist, das Fahrzeug entlang einer die Veränderung der Nutzfläche berücksichtigenden Route an den Zielort zu navigieren.

Um Einsatzmöglichkeiten eines Fahrzeugs zum autonomen Transportieren eines Objektes zu verbessern, schlägt die Erfindung vor, die durch die Seitenwand begrenzte Nutzfläche der Ladefläche veränderbar zu gestalten und die Route des Fahrzeugs an den Zielort in Abhängigkeit der veränderten Nutzfläche zu wählen. Bisherige aus dem Stand der Technik bekannte Fahrzeuge zum autonomen Transportieren eines Objektes an einen Zielort, beispielsweise sogenannte Kommissionierwagen, sind durch eine starr vorgegebene Nutzfläche gekennzeichnet, die sich nicht vergrößern lässt. Zudem ist es für die autonome Navigation solcher aus dem Stand der Technik bekannter Kommissionierwagen Voraussetzung, dass die Größe des Kommissionierwagens, insbesondere die Breite und Länge der Ladefläche bzw. des Kommissionierwagens, genau bekannt ist, um autonom eine Route an den Zielort zu navigieren. Die Zunahme des Online-Handels und damit einhergehende Zunahme von Kommissioniervorgängen verlangt jedoch flexiblere Lösungen, die durch das vorgeschlagene Fahrzeug befriedigt werden. Denn bei dem Fahrzeug lässt sich einerseits durch Veränderung der Nutzfläche, beispielsweise Vergrößerung eines Flächeninhalts, die Nutzfläche an die Anzahl und Größe der zu transportierenden Objekte anpassen. Andererseits berücksichtigt das Fahrzeug die veränderte Nutzfläche und gegebenenfalls daraus resultierende geänderte Durchfahrtsbreiten beim autonomen Transport der Objekte beispielsweise von einem Kommissionierungsort an einen Zielort, an dem die kommissionierten Objekte weiter verladen werden. Anstelle unterschiedlicher Fahrzeuge mit jeweils unterschiedlich großen Ladeflächen bzw. Nutzflächen erlaubt das vorgeschlagene Fahrzeug unterschiedliche Transportanforderungen mit nur einem einzigen Fahrzeugtyp zu befriedigen. Zudem muss nicht vor dem Transport des Objektes des Fahrzeugtyp ausgewählt werden, sondern während eines Kommissioniervorgangs kann die Nutzfläche an die tatsächliche Anzahl und Größe der zu transportierenden Objekte angepasst werden.

Grundsätzlich kann es sich bei dem vorgeschlagenen Fahrzeug um ein beliebiges Fahrzeug handeln, insbesondere um einen Kleinlaster, ein Kraftfahrzeug, ein Zweirad oder einem Rollwagen handeln. Der Begriff "autonom" bedeutet im Rahmen der Erfindung, dass das Fahrzeug selbständig ohne manuelle Interaktion befähigt ist, das Objekt von einem Startort an einen Zielort zu transportieren, eine vorgegebene Wegstrecke hin zum Zielort zurückzulegen und/oder die Wegstrecke selbständig zu bestimmen. Das Fahrzeug kann Einrichtungen zum manuellen Navigieren der Wegstrecke aufweisen, jedoch ebenso als automatisierter Roboter-Rollwagen ohne Führerhaus, Lenkrad oder dergleichen ausgestaltet sein. Im Falle eines Kommissionierwagens ist bevorzugt kein Führerhaus für einen Fahrer vorgesehen, so dass stattdessen, vergleichbar zu einem Anhänger, die Ladefläche bzw. die Nutzfläche in Draufsicht äußere Abmessungen des Fahrzeugs darstellen kann. Verändern der Nutzfläche bedeutet insbesondere Vergrößern und/oder Verkleinern eines Flächeninhaltes der Ladefläche. Entsprechend entspricht bei unveränderter Nutzfläche der Flächeninhalt der Nutzfläche dem der Ladefläche. Die Steuerung ist beispielsweise als Mikroprozessor und/oder computerbasiert ausgestaltet und bevorzugt ausgeführt, die Veränderung der Nutzfläche zu detektieren und/oder zu steuern.

Bei dem Objekt kann es um einen beliebigen transportablen Gegenstand handeln, insbesondere um eine Ware, ein Stückgut und/oder eine Sendung. Das Objekt kann Gegenstände des täglichen Bedarfs, wie beispielsweise Verbrauchsmaterialien oder Lebensmittel sowie technische Gegenstände oder Gerätschaften umfassen. Ebenso können Sendungen wie beispielsweise Briefsendungen, Paketsendungen und/oder Printprodukte wie Prospekte, Broschüren oder Zeitschriften umfasst sein. Bevorzugt ist das Fahrzeug ausgeführt, dass die Ladefläche eine Mehrzahl nebeneinander und/oder übereinander auf der Ladefläche abstellbare Objekte aufnehmen kann. Ganz besonders bevorzugt ist das Fahrzeug als Kommissionierwagen in einem Logistikzentrum, "warehouse", Lager oder Verteilzentrum durch einen Kommissionierer verwendbar, um von dem Kommissionierer aus einem Regalsystem entnommene Objekte zunächst aufzunehmen und in der Folge zu dem Zielort zu transportieren. Die Ladefläche weist bevorzugt eine rechteckige und/oder ebene Nutzfläche auf, auf der die Objekte aufnehmbar, insbesondere stapelbar sind. Neben der Verwendung innerhalb eines Logistikzentrums sind ebenso Anwendungsfälle denkbar, in denen das Fahrzeug im öffentlichen Raum, beispielsweise auf einer Straße, entlang einer vorgegebenen oder selbst zusammengestellten Wegstrecke die Objekte an einen oder mehrere Zielorte transportiert, abliefert und/oder aufnimmt.

Grundsätzlich kann das Verändern der Nutzfläche das Verändern eines Flächeninhalts der Nutzfläche und das Verändern einer geometrischen Form der Nutzfläche umfassen, beispielsweise von einer rechteckigen hin zu einer quadratischen Nutzfläche mit gleichem Flächeninhalt. Die Nutzfläche und/oder ein Flächeninhalt der Ladefläche in Längsrichtung und in Querrichtung der Ladefläche veränderbar ist. Jedenfalls lässt sich derart die Ladefläche, und damit die Nutzfläche, verändern, insbesondere vergrößern und/oder verkleinern.

Die Nutzfläche bleibt beim Verändern und/oder nach dem Verändern weiterhin durch die Seitenwand begrenzt. Insofern wird ein reines Umklappen der Seitenwand, wie es beispielsweise bei einem aus dem Stand der Technik bekannten Anhänger möglich ist, im Rahmen der Erfindung nicht als verändern der Nutzfläche verstanden. Bevorzugt ist die Ladefläche ausgeführt, dass die Nutzfläche während des Transports des Objektes veränderbar ist. Das vorgeschlagene Fahrzeug erlaubt es derart, beispielsweise bei einem bereits begonnenen Kommissierungsvorgang die Nutzfläche dynamisch an die Größe und Anzahl der zu transportierenden Objekte anzupassen. Bevorzugt ist die Ladefläche in zwei unabhängigen, orthogonal zueinander angeordneten Richtungen teleskopartig ausziehbar ausgeführt. Derart kann die Ladefläche, bei einer rechteckigen Grundform, sowohl in Längsrichtung als auch in Querrichtung in ihrer Größe verändert werden.

Grundsätzlich können sich die Ladefläche und die Seitenwand hinsichtlich ihrer Flächennormalen in einem beliebigen Winkel zueinander erstrecken. Nach einer bevorzugten Ausgestaltung sind die Ladefläche und die Seitenwand jedoch in einem starren Winkel zueinander angeordnet. Bevorzugt beträgt dieser starre Winkel 90° und bezieht sich auf die jeweiligen Flächennormalen. Die Ladefläche und die Seitenwand können aus Blech, aus Holz oder einem Verbundwerkstoff ausgestaltet sein. Ebenso kann die Seitenwand als Gitter oder aus einem flexiblen Material ausgeführt sein. Zudem umfasst der Begriff "Seitenwand" auch Borde oder Umrandungen und damit nicht zwangsläufig eine Wandung. Die Seitenwand erstreckt sich bevorzugt vollständig durchgehend um die Nutzfläche herum.

Nach einer bevorzugten Weiterbildung begrenzt die Seitenwand die Ladefläche und/oder die Nutzfläche umlaufend, grenzt spaltlos an die Ladefläche an, ist klappbar an der Ladefläche und/oder orthogonal zu der Ladefläche an dieser angeordnet. Bevorzugt bilden die umlaufende Seitenwand und die Ladefläche die Form eines nach oben geöffneten Quaders aus, um die Objekte durch die Seitenwand gegen Herunterfallen von der Ladefläche zu sichern.

Neben dem Verändern der Nutzfläche, insbesondere dem Größenverändern des Flächeninhalts der Ladefläche, liegt ein weiterer wesentlicher Aspekt der Erfindung darin, dass die Seitenwand längenveränderbar ausgeführt ist. Dazu kann die Seitenwand teleskopartig ausziehbar, klappbar und/oder aus einem flexiblen Material ausgestaltet sein. Beim teleskopartigen Ausziehen können ein oder mehrere Teile der Seitenwand innerhalb eines äußeren Teils versenkt werden. Ebenso wie die Nutzfläche kann die Seitenwand ausgestaltet sein, dass Größen- bzw. Längenveränderungen stufenlos, beispielsweise durch Schrauben, oder in definierten Stufen, beispielsweise durch Verrasten, änderbar sind. Ebenso kann die Seitenfläche und/oder die Ladefläche ausgestaltet sein, dass ein Teil derselben versenkbar und zum Vergrößern ausfahrbar ausgeführt ist.

Nach einer bevorzugten Weiterbildung sind wenigstens zwei Seitenwände vorgesehen, welche nebeneinander an benachbarten Seitenrändern der Ladefläche angeordnet sind, und eine aus einem flexiblen Material ausgeführte und zwischen den zwei Seitenwänden angeordnete Seitenwandverlängerung. Die Seitenwandverlängerung ist bevorzugt aus einem flexiblen Material wie Gummi oder dergleichen ausgeführt und kann innerhalb der Seitenwand angeordnet sein, insbesondere innerhalb der Seitenwand versenkbar sein. Beim Verlängern der Seitenwand wird die Seitenwandverlängerung nach Art eines flexiblen Gummibandes aus der Seitenwand herausgezogen und begrenzt derart die Nutzfläche. Ein Vorteil einer solchen Seitenwandverlängerung liegt in der flexiblen Ausbildung unterschiedlichen Längen der Seitenwand.

Damit das Fahrzeug eine Längenveränderung der Seitenwand und/oder eine Veränderung der Ladefläche detektieren kann, um in der Folge die Route an die Veränderung der Nutzfläche anzupassen, hat es sich als besonders zweckmäßig herausgestellt, wenn an der Seitenwand eine Markierung vorgesehen ist, um die Längenveränderung visuell anzuzeigen, und/oder wenn ein zum Detektieren der Längenveränderung ausgeführter Seitenwandsensor vorgesehen ist. Alternativ oder zusätzlich ist bevorzugt, dass an der Ladefläche eine Markierung vorgesehen ist, um die Veränderung visuell anzuzeigen, und/oder das Fahrzeug einen zum Detektieren der Größenveränderung ausgeführten Ladeflächensensor aufweist. Mittels der Markierung lässt sich visuell und damit manuell erkennen, ob die Seitenwand längenverändert bzw. die Ladefläche verändert ist. Die Markierung kann zweckmäßigerweise als Aufdruck und/oder als Maßband gestaltet sein. Die derart visuell erfasste Längenveränderung bzw. Veränderung kann manuell in die Steuerung eingegeben werden, beispielsweise mittels einer an der Steuerung vorgesehenen Tastatur oder über eine Mobilgerät-App, die in Kommunikationsverbindung mit dem Fahrzeug bzw. der Steuerung steht.

Ebenso lässt sich die Längenveränderung bzw. die Änderung mittels des vorgeschlagenen Seitenwandsensors bzw. des Ladeflächensensors automatisch detektieren. In diesem Zusammenhang ist es besonders bevorzugt, dass der Seitenwandsensor und/oder der Ladeflächensensor einen Schrittmotor, einen Lidar-Sensor und/oder eine Lichtschranke umfasst und/oder der Seitenwandsensor und/oder der Ladeflächensensor ausgeführt ist, die Längenveränderung und/oder die Veränderung anhand einer Änderung eines elektrischen Widerstands der Seitenwand und/oder Ladefläche zu detektieren. Der Seitenwandsensor bzw. der Ladeflächensensor steht bevorzugt in Kommunikationsverbindung mit der Steuerung. Der Lidar-Sensor kann unterhalb der Ladefläche angeordnet sein. Ferner kann der Lidar-Sensor zum autonomen Navigieren des Fahrzeugs und insbesondere zum Erkennen von Hindernissen in einem Umfeldbereich des Fahrzeugs ausgebildet sein.

Derart lässt sich mit einem einzigen Lidar-Sensor sowohl eine Längenveränderung der Seitenwand, eine Veränderung der Ladefläche als auch der Umgebungsbereich zum Navigieren des Fahrzeugs erfassen. Durch Anlegen einer Spannung an die Seitenwand und/oder die Ladefläche und Messung der Änderung des elektrischen Widerstands lässt sich rechnerisch die Längenveränderung der Seitenwand und/oder die Größenänderung der Nutzfläche bestimmen. Die derart erkannte Längenveränderung der Seitenwand und/oder Veränderung der Ladefläche kann durch die Steuerung berücksichtigt werden, um die zu navigierende Route an die Längenveränderung der Seitenwand bzw. Veränderung der Ladefläche anzupassen. Die angepasste Route spart beispielsweise Gänge in einem Logistikzentrum aus, die keine ausreichende Durchfahrtsbreite zum Durchfahren des Fahrzeugs aufweisen.

Die Ladefläche weist eine größenunveränderbare Basisfläche aus einem ersten Material und eine größenveränderbare Ausziehfläche aus einem zweiten demgegenüber flexibleren Material auf. Die Basisfläche kann beispielsweise aus Metall oder Holz gestaltet sein, während die Ausziehfläche aus Kunststoff und/oder einer Plane ausgeführt sein kann.

Ferner kann die Ausziehfläche ein gummiartiges Material umfassen, welches sich bei größenveränderter Ladefläche zwischen der Basisfläche und der Seitenwand erstreckt. Zur Ausgestaltung der Steuerung existieren grundsätzlich verschiedene Möglichkeiten. Wie zuvor angesprochen umfasst die Steuerung bevorzugt einen Mikrocontroller und/oder ist computerbasiert gestaltet, um das Fahrzeug autonom zu navigieren. Dazu verfügt die Steuerung bevorzugt über eine "Intelligenz" derart, dass die Steuerung, gegebenenfalls mittels von an dem Fahrzeug vorgesehenen optischen, akustischen, olfaktorischen und/oder datensignalbasierten Sensoren zur Identifikation und Interpretation von Umweltsignalen das Fahrzeug hin zu dem Zielort navigieren kann, ohne dass es dabei zu Zusammenstößen mit anderen Fahrzeugen oder sonstigen Gegenständen kommt. Nach einer besonders bevorzugten Ausgestaltung ist die Steuerung ausgeführt, das Fahrzeug einer Person in einem vorbestimmten Abstand folgen zu lassen.

Das Fahrzeug, beispielsweise ausgestaltet als Kommissionierwagen zum Kommissionieren von Objekten in einem Lager, kann derart einem Lagermitarbeiters und/oder einem Kommissionierer in einem Abstand von 1 bis 2 Metern durch ein Regalsystem des Logistikzentrums folgen. Der Lagermitarbeiter entnimmt dem Regalsystem vorbestimmte Objekte und stellt diese auf der Ladefläche ab. Ist der Kommissionierwagen vollständig beladen oder alle Objekte aus dem Regalsystem auf der Ladefläche abgestellt, lässt die Steuerung den Kommissionierwagen selbständig hin zu dem Zielort fahren. Darüber hinaus sind auch Szenarien denkbar, dass das Fahrzeug anhand einer zuvor empfangenen Objektliste selbständig eine Route in dem Lager abfährt, so dass der Lagermitarbeiter an definierten Haltepunkten Objekte aus dem Regalsystem entnehmen und auf dem Fahrzeug ablegen kann.

Nach einer weiteren bevorzugten Ausgestaltung ist die Steuerung ausgeführt, die Veränderung zu steuern und/oder die Nutzfläche in Abhängigkeit des zu transportierenden Objektes, insbesondere anhand einer empfangenen Objektliste, zu verändern. Die Steuerung übernimmt jegliche an dem Fahrzeug anfallenden Steuerungsaufgaben betreffend die Navigation, die Veränderung und Anpassung der Route entsprechend der veränderten Ladefläche. Zum Empfangen der Objektliste verfügt das Fahrzeug und/oder die Steuerung zweckmäßigerweise über eine Kommunikationseinrichtung, um Daten, beispielsweise hinsichtlich der zu transportierenden Objekte, drahtlos und/oder drahtgebunden mit einem Logistikzentrum, einer Verteilstation oder dergleichen auszutauschen.

Grundsätzlich kann das Fahrzeug einen Verbrennungsmotor aufweisen, um beispielsweise auf einer Straße, verschiedene Orte entlang der Route selbständig auch über längere Distanzen anzufahren. Als besonders vorteilig hat sich jedoch erwiesen, wenn das Fahrzeug eine Batterie für die Steuerung und einen entsprechenden, durch die Batterie gespeisten elektromechanischen Antrieb aufweist. Bevorzugt erkennt die Steuerung selbstständig, wenn die Batterie aufgeladen werden muss, um daraufhin ebenso selbstständig eine Ladestation anzufahren und sich mit dieser elektrisch zum Aufladen der Batterie zu verbinden.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: eine schematisch-perspektivische Ansicht eines Fahrzeugs zum autonomen Transportieren eines Objektes gemäß einem bevorzugten Ausführungsbeispiel der Erfindung,
- Fig. 2: eine schematisch-perspektivische Draufsicht des Fahrzeugs gemäß Fig. 1 gemäß dem bevorzugten Ausführungsbeispiel der Erfindung,
- Fig. 3: eine schematische Draufsicht einer Seitenwand des Fahrzeugs gemäß Fig. 1 gemäß dem bevorzugten Ausführungsbeispiel der Erfindung, und
- Fig. 4: eine schematische Draufsicht zweier Seitenwände des Fahrzeugs gemäß Fig. 1 gemäß dem bevorzugten Ausführungsbeispiel der Erfindung.

### Detaillierte Beschreibung der Ausführungsbespiele

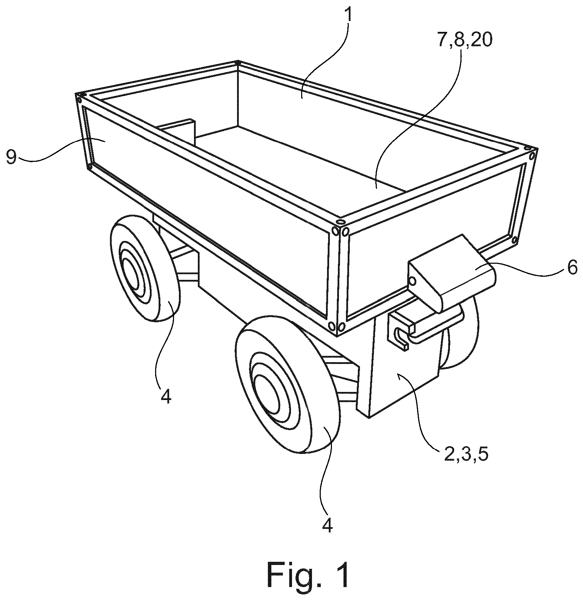

Fig. 1 zeigt ein Fahrzeug zum autonomen Transportieren eines Objektes 1 an einen Zielort gemäß einem bevorzugten Ausführungsbeispiel der Erfindung in einer schematischperspektivischen Ansicht. Das Fahrzeug ist nach Art eines Kommissionierwagens, auch Rollwagen genannt, ausgeführt und weist einen kastenförmigen Unterbau 2 auf. In dem Unterbau 2 ist ein Antrieb 3 für vier seitlich an dem Unterbau 2 vorgesehene Räder 4 vorgesehen. Zudem ist in dem Unterbau 2 eine Batterie 5 angeordnet, um den Antrieb 3 sowie eine Steuerung 6 des Fahrzeugs mit elektrischer Energie zu versorgen.

Die computerbasierte Steuerung 6 ist ausgeführt, das Fahrzeug einem Kommissionierer in einem vordefinierten Abstand von wenigen Metern folgen zu lassen. Dazu weist das Fahrzeug verschiedene, im Weiteren nicht näher beschriebene Sensoren auf, die ein autonomes Navigieren des Fahrzeugs zwischen nicht dargestellten Regalen in einem Lager ermöglichen. Der Kommissionierer entnimmt aus den Regalen die Objekte 1, beispielsweise Stückgüter, Pakete oder dergleichen, und legt diese auf einer auf dem Unterbau 2 aufgesetzten kastenartigen Ladefläche 7 ab. Die rechteckige Ladefläche mit einer Nutzfläche 8 von 2 m² ist umlaufend von die Nutzfläche 8 begrenzenden Seitenwänden mit einer Höhe von 30 cm eingefasst, die spaltlos an die Ladefläche 7 angrenzen. Wie in Fig. 1 gezeigt, sind Objekte 1 auf der Ladefläche 7 aufnehmbar und während des Transports durch die Seitenwände 9 gegen Herunterfallen von dem Fahrzeug gesichert.

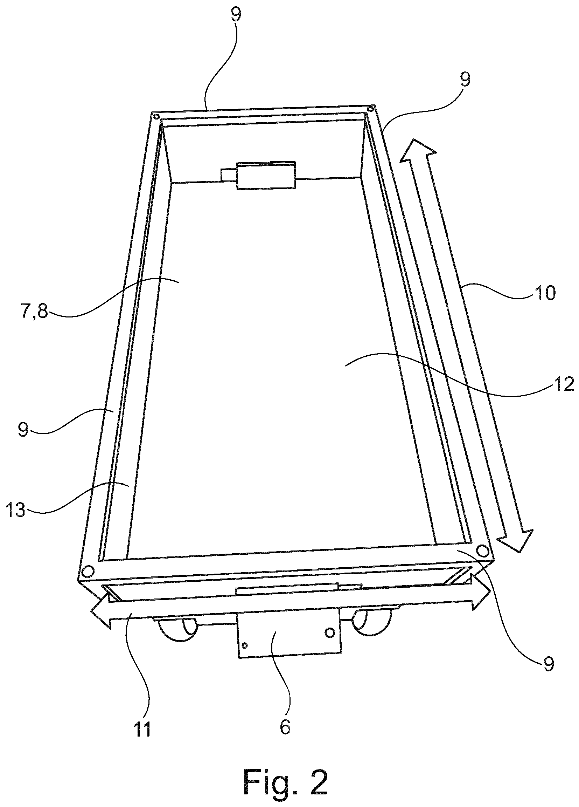

In der in Fig. 1 gezeigten Ausgangsposition schließt die Ladefläche 7 in Draufsicht hinsichtlich ihrer Quererstreckung im Wesentlichen bündig mit den Rädern 7 ab und überragt diese nicht. In Längserstreckung, abgesehen von der Steuerung 6, ragt die Ladefläche 7 nicht über die Längserstreckung des Unterbaus 2 hervor. Die Ladefläche 7 ist jedoch, wie in Fig. 2 gezeigt, in ihrer durch die Seitenwände 9 begrenzten Nutzfläche veränderbar. Konkret ist ein Flächeninhalt der Ladefläche 7 in Längsrichtung, angedeutet durch Pfeil 10, sowie in Querrichtung, angedeutet durch Pfeil 11, der Ladefläche 7 größenveränderbar.

Bei einer Größenveränderung der Nutzfläche 8 in Längsrichtung 10 ragt die größenveränderte Ladefläche 7 entsprechend über den Unterbau 2 hervor, nicht gezeigt. Analoges gilt für eine Größenveränderung der Nutzfläche in Querrichtung 11 der Ladefläche 7. Während in der in Fig. 1 gezeigten Ausgangsposition die Seitenwände 9 der Längsseiten der Ladefläche im Wesentlichen vertikal über den Rädern 4 angeordnet sind, können die Seitenwände der Längsseiten der Ladefläche 7 nach einer Größenveränderung der Nutzfläche in Querrichtung der Ladefläche 7 neben den Rädern 4 angeordnet sein, und diese in Querrichtung 11 entsprechend überragen.

Das Verändern der Nutzfläche 8, insbesondere das Verändern des Flächeninhalts der Ladefläche 7, meint im Rahmen der Erfindung jedoch nicht ein mögliches Umklappen der Seitenwände 9, wodurch ebenso eine Vergrößerung der Nutzfläche 8 erreicht werden kann. Das bedeutet, dass beim Verändern der Nutzfläche 8, also beispielsweise dem Vergrößern des Flächeninhalts der Ladefläche 7, ebenso ein Verlängern der Seitenwand 9 mit einhergeht. Bei den in Fig. 1 und Fig. 2 gezeigten Ausgestaltungen erstreckt sich die Flächennormale der Ladefläche 7 und der Seitenwand 9 in einem starren Winkel von 90° zueinander.

Zum Verändern des Flächeninhalts der Ladefläche 9 sowie der Länge der Seitenwand 9 existieren verschiedene Möglichkeiten. Zudem weist die Ladefläche 7 eine größenunveränderbare Basisfläche 12 aus einem ersten Material, beispielsweise aus Metall, und eine größenveränderbare Ausziehfläche 13 aus einem zweiten demgegenüber flexibleren Material wie Gummi auf. Sofern nun, exemplarisch, die Ladefläche 7 in Querrichtung 11 verlängert werden soll, dehnt sich das Gummiband, welches zwischen der größenunveränderbaren Basisfläche 12 und der Seitenwand 9 gehalten sein kann.

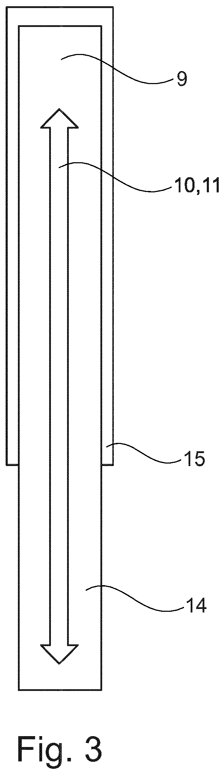

Fig. 3 zeigt eine Seitenwand 9 in einer schematischen Schnittdraufsicht mit einem ersten Teil 14, der in einem zweiten, äußeren Teil 15 der Seitenwand 9 einführbar bzw. in dieser zum Längenverändern der Seitenwand 9 in Längsrichtung 10 oder Querrichtung 11 ist. Im in Fig. 3 gezeigten ausgezogenen Zustand sind sowohl der erste Teil 14 als auch der zweite Teil 15 sichtbar. Die beiden Teile 14, 15 können stufenlos verschiebbar ausgeführt und miteinander verbindbar gestaltet sein, beispielsweise stufenlos mittels Schrauben oder in definierten Abstufungen mittels entsprechender Rastmittel, um den ersten Teil gegenüber dem zweiten Teil 15 zu fixieren.

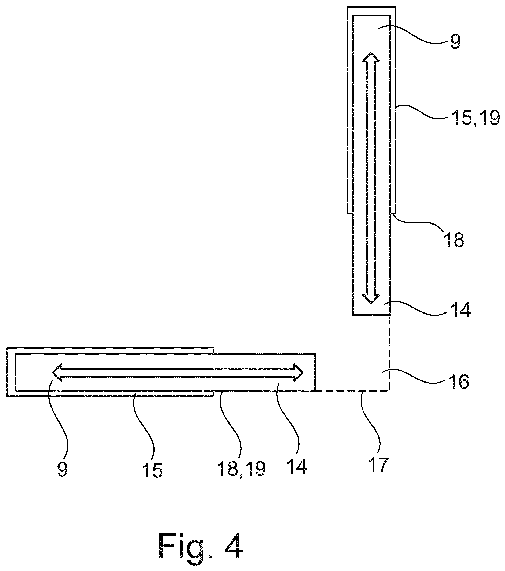

Fig. 4 zeigt zwei Seitenwände 9 in schematischer Schnittdraufsicht, wobei die beiden Seitenwände jeweils wie zuvor beschrieben mit einem ersten Teil 14, welches in einen zweiten Teil 15 einführbar ist, ausgeführt sind. Zwischen den jeweiligen ersten Teilen 14 der hinsichtlich ihrer Flächennormalen orthogonal zueinander angeordneten Seitenwänden 9 klafft an einer Ecke der Ladefläche 7 eine Lücke 16, die durch eine aus einem Gummiband ausgeführte Seitenwandverlängerung 17, die nahtlos an die beiden ersten Teile 14 angrenzt, geschlossen ist. Die Ladefläche 7, wenn auch nicht gezeigt, kann analog ausgestaltet sein, beispielsweise einen Klappmechanismus aufweisen, oder ein ausfahrbares Bodenteil aufweisen, um eine solche Lücke 16 in der Ladefläche 7 zu schließen.

In jedem Fall lassen sich mit den zuvor beschriebenen Ausgestaltungen die Nutzfläche 8 hinsichtlich ihrer geometrischen Form und ihres durch die Seitenwände 9 begrenzten Flächeninhalts verändern, um beispielsweise während des Transports von einem ersten Ort an einen Zielort die Nutzfläche 8 des Fahrzeugs entsprechend der zu transportierenden Objekte 1 zu verändern.

Sowohl an den Seitenwänden 9 als auch an der Ladefläche 7 sind jeweils Markierungen 18 in Form eines aufgedruckten Maßbandes vorgesehen, um visuell eine Längenveränderung der Seitenwände 9 bzw. eine Größenveränderung der Ladefläche 7 erkennen zu können. Zudem sind an jeder Seitenwand 9 jeweils ein Seitenwandsensor 19 zum Detektieren der Längenveränderung der jeweiligen Seitenwand 9 vorgesehen. In analoger Weise ist an der Ladefläche 7 ein Ladeflächensensor 20 angeordnet, durch den eine Veränderung des Flächeninhalts der Ladefläche 7 detektierbar ist.

Sowohl der Seitenwandsensor 19 als auch der Ladeflächensensor 20 können als Schrittmotor, der die Längenveränderung der Seitenwand 9 bzw. die Größenveränderung der Ladefläche 7 bewirkt, ausgeführt sein. Ebenso können der Seitenwandsensor 19 bzw. der Ladeflächensensor 20 als Lidar-Sensor ausgestaltet sein, welcher neben der Detektion der Längen- bzw. Größenveränderung ebenso zum Erkennen eines Umgebungsbereiches des Fahrzeugs zum autonomen Navigieren verwendbar ist. Zudem ist es auch möglich, durch Anlegen einer Spannung und Messung einer Änderung eines elektrischen Widerstands der Seitenwand 9 bzw. der Ladefläche 7 die Längenveränderung bzw. die Größenänderung zu detektieren.

Wie zuvor bereits angesprochen ist die Steuerung 6 ausgeführt, das Fahrzeug autonom innerhalb eines Logistikzentrums durch Gänge zwischen den dort aufgestellten Regalen oder auch außerhalb des Logistikzentrums auf öffentlichen Straßen zu navigieren. Durch den bereits ebenso angesprochenen Lidar-Sensor erfasst das Fahrzeug selbständig Umgebungsinformationen in dem das Fahrzeug umgebenden Umgebungsbereich und errechnet mittels der Steuerung 6 selbständig eine zurückzulegende Route, beispielsweise von einer Ladestation, an der die Batterie 5 des Fahrzeugs geladen wird, hin zu einem Zielort, an dem der Kommissionierer mit seinem Kommissionierungsvorgang beginnt. Die Route ist abhängig von Außenmaßen des Fahrzeugs, damit dieses durch Gänge zwischen den Regalen des Logistikzentrums hindurchfahren kann.

Durch Änderung der Nutzfläche 8, insbesondere bei Vergrößerung der Nutzfläche 8 in Querrichtung 11, verbreitert sich das Fahrzeug. Die Steuerung 6 ist ausgeführt, diese Verbreiterung des Fahrzeugs detektiert durch den Seitenwandsensor 19 und/oder den Ladeflächensensor 20, bei der Wahl der Route zu berücksichtigen. Konkret wird bei Veränderung der Nutzfläche 8 die zu navigierende Route an den Zielort angepasst. Das bedeutet, dass die Route einerseits unverändert bleiben kann, sofern die geplante Route trotz der veränderten Breite des Fahrzeugs zurücklegbar ist. Sollte die geplante Route beispielsweise Gänge zwischen den Regalen des Logistikzentrums umfassen, die durch das Fahrzeug aufgrund der vergrößerten Breite nicht mehr passierbar sind, ändert die Steuerung 6 selbständig die Route an den Zielort und klammert bei der geänderten Route Gänge mit nicht ausreichender Durchfahrtsbreite aus.

Zusammenfassend erlaubt das Fahrzeug das autonome Transportieren von Objekten 1 in Form von Stückgütern, Paketen, Waren oder sonstigen transportablen Gütern in äußerst flexibler Weise und autonom an einen Zielort derart, dass beispielsweise während des Transports die Nutzfläche 8 dynamisch größenveränderbar ist und automatisch die zurückzulegende Route an geänderte Abmessungen des Fahrzeugs angepasst wird, um beispielsweise Gänge oder Straßen mit nicht ausreichender Durchfahrtsbreite auszulassen.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Fahrzeug zum autonomen Transportieren eines Objektes (1) an einen Zielort, mit
einer Ladefläche (7) zum Aufnehmen des Objektes (1),
sich längs um die Ladefläche (7) herum erstreckenden und eine Nutzfläche (8) der Ladefläche (7) umlaufend begrenzenden längenveränderbaren Seitenwänden (9), wobei die Ladefläche (7) eine größenunveränderbare Basisfläche (12) aus einem ersten Material und eine größenveränderbare Ausziehfläche (13) aus einem zweiten demgegenüber flexibleren Material aufweist, welche Ausziehfläche (13) sich zwischen der größenunveränderbaren Basisfläche (12) und den Seitenwänden (9) erstreckt, wodurch die Ladefläche (7) ausgeführt ist, die Nutzfläche (8) zu verändern womit ein Verändern der Seitenwände (9) einhergeht, so dass die Nutzfläche (8) und/oder ein Flächeninhalt der Ladefläche (7) in Längsrichtung (10) und in Querrichtung (11) der Ladefläche (7) veränderbar ist, und
einer Steuerung (6), welche ausgeführt ist, eine Route unter Berücksichtigung der Veränderung der Nutzfläche (8) und/oder der Ladefläche (7) anzupassen und zu verändern, und das Fahrzeug entlang der die Veränderung der Nutzfläche (8) und/oder der Ladefläche (7) berücksichtigenden Route an den Zielort zu navigieren.

2. Fahrzeug nach dem vorhergehenden Anspruch, wobei die Ladefläche (7) und die Seitenwände (9) in einem starren Winkel zueinander angeordnet sind.

3. Fahrzeug nach einem der vorhergehenden Ansprüche, wobei die Seitenwände (9) spaltlos an die Ladefläche (7) angrenzen, klappbar an der Ladefläche (7) und/oder orthogonal zu der Ladefläche (7) angeordnet sind.

4. Fahrzeug nach einem der vorhergehenden Ansprüche, wobei die Seitenwände (9) zum Längenverändern teleskopartig ausziehbar, klappbar und/oder aus einem flexiblen Material ausgestaltet sind.

5. Fahrzeug nach einem der vorhergehenden Ansprüche, wobei die Seitenwände nebeneinander an benachbarten Seitenrändern der Ladefläche (7) angeordnet sind, und mit einer aus einem flexiblen Material ausgeführten und zwischen den Seitenwänden angeordneten Seitenwandverlängerung (17).

6. Fahrzeug nach einem der vorhergehenden Ansprüche, wobei an den Seitenwänden (9) eine Markierung (18) vorgesehen ist, um die Längenveränderung visuell anzuzeigen, und/oder mit einem zum Detektieren der Längenveränderung ausgeführten Seitenwandsensor (19).

7. Fahrzeug nach einem der vorhergehenden Ansprüche, wobei an der Ladefläche (7) eine Markierung (18) vorgesehen ist, um die Veränderung visuell anzuzeigen, und/oder mit einem zum Detektieren der Veränderung ausgeführten Ladeflächensensor (20).

8. Fahrzeug nach einem der vorhergehenden Ansprüche mit einem zum Detektieren einer Längenveränderung ausgeführten Seitenwandsensor (19) oder mit einem zum Detektieren einer Veränderung der Ladefläche (7) ausgeführten Ladeflächensensor (29), wobei der Seitenwandsensor (19) und/oder der Ladeflächensensor (20) einen Schrittmotor, einen Lidar-Sensor und/oder eine Lichtschranke umfasst und/oder der Seitenwandsensor (19) und/oder der Ladeflächensensor (20) ausgeführt ist, die Längenveränderung und/oder die Veränderung anhand einer Änderung eines elektrischen Widerstands der Seitenwand (9) und/oder der Ladefläche (7) zu detektieren.

9. Fahrzeug nach einem der vorhergehenden Ansprüche, wobei die Steuerung (6) ausgeführt ist, das Fahrzeug einer Person in einem vorbestimmten Abstand folgen zu lassen.

10. Fahrzeug nach einem der vorhergehenden Ansprüche, wobei die Steuerung (6) ausgeführt ist, die Veränderung zu steuern und/oder die Nutzfläche (8) in Abhängigkeit des zu transportierenden Objektes, insbesondere anhand einer empfangenen Objektliste, zu verändern.

11. Fahrzeug nach einem der vorhergehenden Ansprüche, mit einem Antrieb (3) für das Fahrzeug und einer Batterie (5) für die Steuerung (6) und den Antrieb (3).

## Claims

1. Vehicle for autonomously transporting an object (1) to a destination, with
a loading surface (7) for receiving the object (1),
variable-length side walls (9) which extend longitudinally around the loading surface (7) and delimit a usable area (8) of the loading surface (7) peripherally, wherein the loading surface (7) has a fixed-size base surface (12) made of a first material and a variable-size pull-out surface (13) made of a second material which is more flexible in contrast, which pull-out surface (13) extends between the fixed-size base surface (12) and the side walls (9), whereby the loading surface (7) is designed to change the usable area (8), which is accompanied by a change in the side walls (9), with the result that the usable area (8) and/or a surface area of the loading surface (7) can be changed in the longitudinal direction (10) and in the transverse direction (11) of the loading surface (7), and
a controller (6) which is designed to adapt and modify a route taking into account the change in the usable area (8) and/or the loading surface (7), and to navigate the vehicle along the route, which takes into account the change in the usable area (8) and/or the loading surface (7), to the destination.

2. Vehicle according to the preceding claim, wherein the loading surface (7) and the side walls (9) are arranged at a rigid angle with respect to each other.

3. Vehicle according to either of the preceding claims, wherein the side walls (9) adjoin to the loading surface (7) without gaps, and are arranged foldably on the loading surface (7) and/or orthogonally with respect to the loading surface (7).

4. Vehicle according to one of the preceding claims, wherein, in order to change the length, the side walls (9) are designed to be telescopically extendable, foldable and/or made of a flexible material.

5. Vehicle according to one of the preceding claims, wherein the side walls are arranged next to one another on adjacent side edges of the loading surface (7), and with a side wall extension (17) made of a flexible material and arranged between the side walls.

6. Vehicle according to one of the preceding claims, wherein a marking (18) is provided on the side walls (9), in order to visually indicate the change in length, and/or with a side wall sensor (19) designed to detect the change in length.

7. Vehicle according to one of the preceding claims, wherein a marking (18) is provided on the loading surface (7), in order to visually indicate the change, and/or with a loading surface sensor (20) designed to detect the change.

8. Vehicle according to one of the preceding claims with a side wall sensor (19) designed to detect a change in length or with a loading surface sensor (29) designed to detect a change in the loading surface (7), wherein the side wall sensor (19) and/or the loading surface sensor (20) comprise/comprises a stepper motor, a LIDAR sensor and/or a light barrier, and/or the side wall sensor (19) and/or the loading surface sensor (20) are/is designed to detect the change in length and/or the change by means of a change in an electrical resistance of the side wall (9) and/or the loading surface (7).

9. Vehicle according to one of the preceding claims, wherein the controller (6) is designed to allow the vehicle to follow a person at a predetermined distance.

10. Vehicle according to one of the preceding claims, wherein the controller (6) is designed to control the change and/or to change the usable area (8) depending on the object to be transported, in particular by means of a received object list.

11. Vehicle according to one of the preceding claims, with a drive (3) for the vehicle and a battery (5) for the controller (6) and the drive (3).

## Revendications

1. Véhicule destiné au transport autonome d'un objet (1) vers une destination, comprenant
une surface de chargement (7) pour la réception de l'objet (1),
des parois latérales (9) à longueur modifiable qui s'étendent longitudinalement autour de la surface de chargement (7) et délimitent de manière périphérique une surface utile (8) de la surface de chargement (7), la surface de chargement (7) présentant une surface de base (12) à dimension invariable constituée d'un premier matériau et une surface extensible (13) à dimension variable constituée d'un second matériau, plus flexible que le premier, laquelle surface extensible (13) s'étend entre la surface de base (12) à dimension invariable et les parois latérales (9), d'où il résulte que la surface de chargement (7) est conçue pour modifier la surface utile (8), ce qui entraîne une modification des parois latérales (9), de telle sorte que la surface utile (8) et/ou une aire de la surface de chargement (7) est modifiable dans la direction longitudinale (10) et dans la direction transversale (11) de la surface de chargement (7), et
une commande (6) qui est conçue pour adapter et modifier un itinéraire en tenant compte de la modification de la surface utile (8) et/ou de la surface de chargement (7), et pour diriger le véhicule jusqu'à la destination le long de l'itinéraire qui prend en compte la modification de la surface utile (8) et/ou de la surface de chargement (7).

2. Véhicule selon la revendication précédente, dans lequel la surface de chargement (7) et les parois latérales (9) sont agencées l'une par rapport à l'autre selon un angle fixe.

3. Véhicule selon l'une des revendications précédentes, dans lequel les parois latérales (9) sont adjacentes à la surface de chargement (7) sans interstice, peuvent être repliées sur la surface de chargement (7) et/ou agencées perpendiculairement à la surface de chargement (7).

4. Véhicule selon l'une des revendications précédentes, dans lequel les parois latérales (9) sont conçues pour la modification de longueur pour être extensibles de manière télescopique, repliables et/ou constituées d'un matériau flexible.

5. Véhicule selon l'une des revendications précédentes, dans lequel les parois latérales sont agencées côte à côte sur les bords latéraux adjacents de la surface de chargement (7), et ayant un prolongement de paroi latérale (17) qui est réalisé en un matériau flexible et agencé entre les parois latérales.

6. Véhicule selon l'une des revendications précédentes, dans lequel il est prévu un marquage (18) sur les parois latérales (9) pour indiquer visuellement la modification de longueur, et/ou comprenant un capteur de paroi latérale (19) conçu pour détecter la modification de longueur.

7. Véhicule selon l'une des revendications précédentes, dans lequel il est prévu un marquage (18) sur la surface de chargement (7) pour indiquer visuellement la modification, et/ou comprenant un capteur de surface de chargement (20) conçu pour détecter la modification.

8. Véhicule selon l'une des revendications précédentes, comprenant un capteur de paroi latérale (19) conçu pour détecter une modification de longueur ou un capteur de surface de chargement (29) conçu pour détecter une modification de la surface de chargement (7), le capteur de paroi latérale (19) et/ou le capteur de surface de chargement (20) comprenant un moteur pas à pas, un capteur lidar et/ou une barrière photoélectrique et/ou le capteur de paroi latérale (19) et/ou le capteur de surface de chargement (20) étant conçu pour détecter la modification de longueur et/ou la modification sur la base d'une modification d'une résistance électrique de la paroi latérale (9) et/ou de la surface de chargement (7).

9. Véhicule selon l'une des revendications précédentes, la commande (6) étant conçue pour amener le véhicule à suivre une personne à une distance prédéterminée.

10. Véhicule selon l'une des revendications précédentes, la commande (6) étant conçue pour commander la modification et/ou modifier la surface utile (8) en fonction de l'objet à transporter, notamment sur la base d'une liste d'objets reçue.

11. Véhicule selon l'une des revendications précédentes, comprenant un dispositif d'entraînement (3) pour le véhicule et une batterie (5) pour la commande (6) et le dispositif d'entraînement (3).
